# EUROPÄISCHE PATENTSCHRIFT

(11) **EP 0 789 811 B1**
(45) Veröffentlichungstag und Bekanntmachung des Hinweises auf die Patenterteilung: **06.10.1999**
(21) Anmeldenummer: 96924773.3
(22) Anmeldetag: 25.07.1996
(51) Int. Cl.: F02P 5/152

(54) **VERFAHREN ZUR KLOPFREGELUNG EINER BRENNKRAFTMASCHINE**
KNOCK CONTROL PROCESS FOR AN INTERNAL COMBUSTION ENGINE
PROCEDE DE REGULATION ANTI-CLIQUETIS D'UN MOTEUR A COMBUSTION INTERNE

(30) Priorität: 02.09.1995 DE 19532504
(43) Veröffentlichungstag der Anmeldung: 20.08.1997
(73) Patentinhaber: ROBERT BOSCH GMBH, 70442 Stuttgart (DE)
(72) Erfinder: UNLAND, Stefan, D-71701 Schwieberdingen (DE); TORNO, Oskar, D-71701 Schwieberdingen (DE); HÄMING, Werner, D-74861 Neudenau (DE); SURJADI, Iwan, D-71665 Vaihingen (DE); SLOBODA, Robert, Yokohama 223 (JP); BÄUERLE, Michael, D-71701 Markgröningen (DE)
(86) Internationale Anmeldenummer: DE9601375
(87) Internationale Veröffentlichungsnummer: WO9709530

(56) Entgegenhaltungen:
- DE-A- 4 300 406

## Beschreibung

### Stand der Technik

Die Erfindung geht aus von einer adaptiven Klopfregelung nach der Gattung des Hauptanspruchs. Es ist schon eine solche Klopfregelung aus der DE-OS 40 08 170 bekannt, bei welcher der Zündwinkel aufgrund der erfaßten Betriebsparameter anhand eines Kennfeldes eingestellt und bei Auftreten von Klopfen zur Vermeidung dieses Klopfens nach spät verstellt wird. Anschließend wird der spät verstellte Zündwinkel durch eine stufenweise Rückführung in Richtung früh wieder an den Kennfeldzündwinkel herangeführt. Der Betriebsbereich einer Brennkraftmaschine ist bei dieser bekannten Klopfregelung in verschiedene Bereiche unterteilt. Beim Verlassen eines Betriebsbereiches während des Betriebs der Brennkraftmaschine wird der momentan aktuelle Zündwinkel abgespeichert und beim erneuten Betrieb der Brennkraftmaschine in diesem Bereich wird der abgespeicherte Zündwinkel als Startwert ausgegeben.

### Vorteile der Erfindung

Das erfindungsgemäße Verfahren mit den Merkmalen des Hauptanspruchs hat gegenüber dem Bekannten den Vorteil, daß Zündwinkel-Sprünge vermieden werden. Damit treten auch keine Drehmomentensprünge am Motor auf, so daß sich der Fahrkomfort verbessert.

Durch die in den Unteransprüchen aufgeführten Maßnahmen sind vorteilhafte Weiterbildungen und Verbesserungen des angegebenen Verfahrens möglich. So ist es vorteilhaft, den Zündwinkel aus dem vorherigen Betriebsbereich, welcher beim Verlassen dieses Betriebsbereichs gerade aktuell war, für den Betrieb in dem neuen Betriebsbereich beizuhalten, wenn die Last- und/oder Drehzahldynamik beim Bereichswechsel einen vorgebbaren Wert nicht überschreitet, wobei der vorgebbare Wert beispielsweise für die verschiedenen Betriebsbedingungen in der Applikation ermittelt und in einem Speicher abgelegt wird. Des weiteren ist es vorteilhaft als Startwert für den Zündwinkel für den Betrieb der Brennkraftmaschine nach einem Bereichswechsel einen repräsentativen Wert für die Zündwinkel, die in dem vorherigen Betrieb der Brennkraftmaschine in diesem Bereich aufgetreten sind, zu berechnen. Letztendlich ist es möglich, das Kennfeld im Mikroprozessor zur Ausgabe des Zündwinkels aufgrund der Betriebsparameter laufend Art zu aktualisieren, so daß die Klopfgrenze vom Mikroprozessor ständig gelernt wird. Dies kann beispielsweise geschehen, in dem der letzte Zündwinkel vor Auftreten eines Klopfens als neuer Zündwinkel für diesen Betriebspunkt in das Kennfeld hineingeschrieben wird. Eine weitere Möglichkeit besteht darin, den ersten Zündwinkel nach dem Auftreten von Klopfen in das Kennfeld zu schreiben. Denkbar ist auch, den Zündwinkel vor dem Auftreten von Klopfen mit einer geringen Korrektur beispielsweise einer festlegbaren Zündwinkelverschiebung AZW zu beaufschlagen und diesen Wert in das Kennfeld zu schreiben. Im übrigen kann noch vorgesehen werden, daß diese Korrektur des Kennfeldzündwinkels nur erfolgt, wenn der gespeicherte Zündwinkel des Kennfeldes sich von dem neuen in das Kennfeld zu schreibenden Zündwinkel um eine vorgebbare Differenz DZW unterscheidet. Dies hat den Vorteil, daß ein Betrieb der Brennkraftmaschine möglichst dicht an der Klopfgrenze gewährleistet ist.

### Zeichnung

Ausführungsbeispiele dieser Erfindung sind in der Zeichnung dargestellt und in der nachfolgenden Beschreibung näher erläutert. Es zeigen
Figur 1 ein schematisches Klopfschaltbild zur adaptiven Klopfregelung,
Figur 2 ein adaptives Kennfeld,
Figur 3 die Veränderung des Zündwinkels aufgrund des erfindungsgemäßen Verfahrens und
Figur 4 schematisch die einzelen Verfahrensschritte.

### Beschreibung der Ausführungsbeispiele

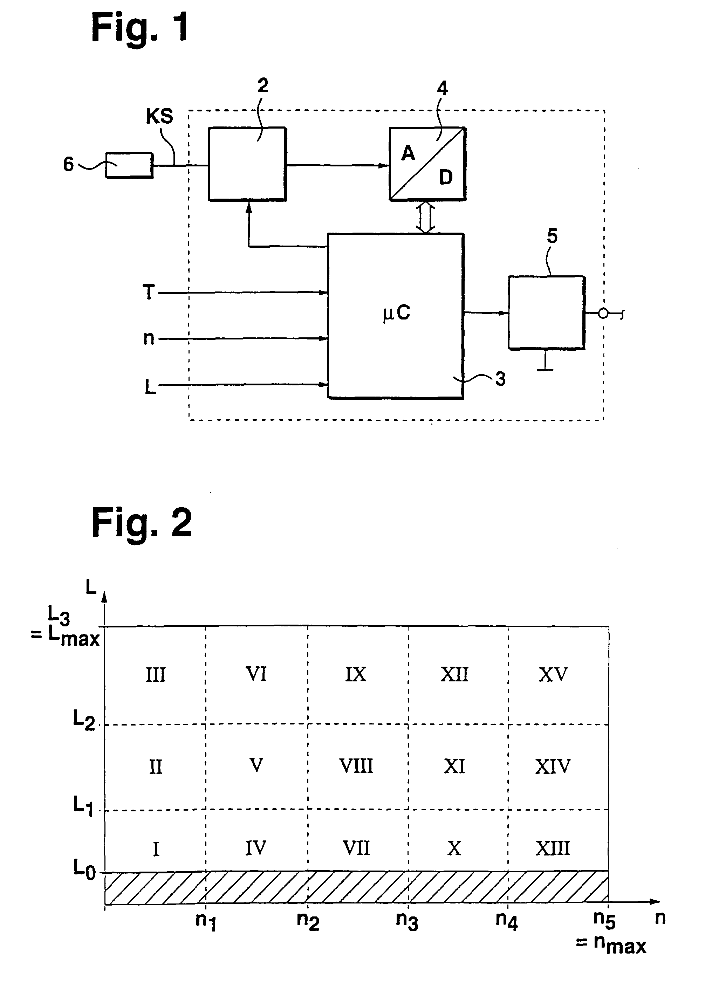

Figur 1 zeigt ein Blockschaltbild zur Durchführung des Verfahrens einer adaptiven Klopfregelung. Die nicht dargestellte Brennkraftmaschine wird mit einem Steuergerät 1 betrieben, das eine Klopfsensor-Auswerteschaltung 2, einen Mikroprozessor 3, einen Analog-Digital-Wandler 4 und eine Zündendstufe 5 aufweist. Am Motorblock der Brennkraftmaschine sind ein oder mehrere Klopfsensoren 6 vorhanden, die an die Klopfsensor-Auswerteschaltung 2 angeschlossen sind. Die Klopfsensorauswerteschaltung 2 ist über den Analog-Digital-Wandler 4 mit dem Mikroprozessor 3 verbunden. An den Mikroprozessor 3 sind ferner die erfaßten Parameter der Brennkraftmaschine geführt. So wird beispielsweise die Last L, welche aus der Drosselklappenwinkelstellung oder/und dem Saugrohrdruck ermittelt wird, die Drehzahl n und die Temperatur T dem Mikroprozessor zugeführt. Das vom Klopfsensor erfaßte Signal KS, welches die Motorgeräusche repräsentiert, wird der Klopfsensor-Auswerteschaltung 2 zugeführt. In dieser Auswerteschaltung 2 wird durch Vergleich mit einem Referenzwert ermittelt, ob ein Klopfen K aufgetreten ist. Beim Auftreten eines Klopfens erfolgt eine Verstellung des vom Mikroprozessor aufgrund des Kennfeldes ausgegebenen Zündwinkels in Richtung Spät sowie eine anschließende Rückführung des Zündwinkels in Richtung Früh, was eine Annäherung an den vom Kennfeld ausgegebenen Zündwinkel entspricht. Diese Klopfregelung mit der dazu notwendigen Zündwinkelverstellung wird vom Mikroprozessor 3 vorgenommen. Dieser Mikroprozessor 3 berechnet jeweils aus den vorhandenen Betriebsparametern einen Kennfeld-Zündwinkel, welcher nach Auftreten eines Klopfens mit einer adaptiven Zündwinkelverstellung Δα beaufschlagt wird. In dem Mikroprozessor 3 ist ein Adaptionskennfeld, wie es in Figur 2 dargestellt ist, gespeichert. Dieses Adpations-Kennfeld ist hierbei in Abhängigkeit von der Last L und der Drehzahl n in einzelnen Betriebsbereiche unterteilt. Eine genaue Beschreibung dieses Adaptions-Kennfeldes ist der DE-OS 40 08 170 zu entnehmen.

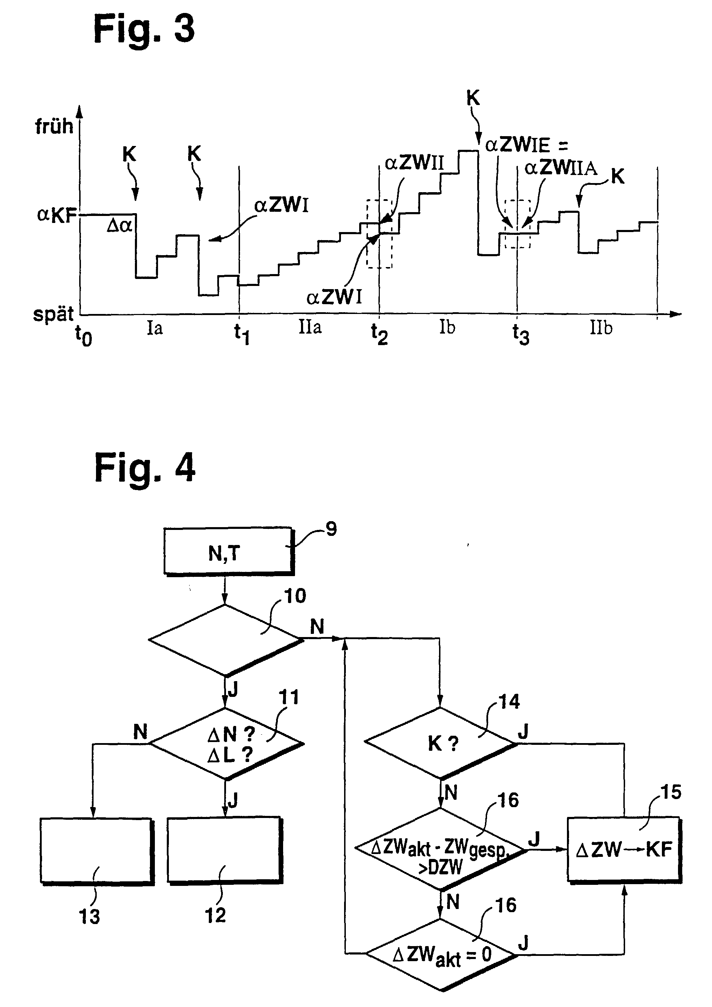

Der Ablauf des erfindungsgemäßen Verfahrens zur Klopfregelung soll nun anhand von Figur 3, die den Betrieb der Brennkraftmaschine in einem beliebigen Beobachtungszeitraum den Betrieb der Brennkraftmaschine zeigt, erläutert werden. Zum Zeitpunkt t0 beginnt eine Brennkraftmaschine im Betriebsbereich I zu arbeiten. Vom Steuergerät wird aufgrund der aktuellen erfaßten Betriebsparameter anhand eines Kennfeldes, das sich über Drehzahl und Last aufspannt, ein Zündwinkel α_{KF} bestimmt. Während des Betriebs der Brennkraftmaschine im Betriebsbereich I wird Klopfen K detektiert. Damit erfolgt eine Verstellung des Zündwinkels um Δα in Richtung Spät. Die Größe der Verstellung des Zündwinkels in Richtung Spät hängt von der Klopfintensität ab. Anschließend erfolgt eine stufenweise Rückführung des Zündwinkels in Richtung Früh, wodurch eine Annäherung an den Kennfeld-Zündwinkel erreicht werden soll. Diese Rückführung erfolgt so lange, bis ein erneutes Klopfen K auftritt oder bis der Kennfeldzündwinkel erreicht ist. Im Ausführungsbeispiel nach Figur 3 tritt während des Betriebs im Betriebsbereich I ein weiteres Klopfen K auf, wodurch eine erneute Spätverstellung des Zündwinkels erfolgt. Zum Zeitpunkt t1 erfolgt ein Bereichswechsel in der Brennkraftmaschine also beispielsweise ein Wechsel vom Lastin den Schubbetrieb. Beim Verlassen des Betriebsbereiches I wird der letzte Zündwinkel α_{ZWI} für diesen Betriebsreich in einem Speicher des Mikroprozessors 3 abgelegt. Denkbar ist auch, daß nicht der letzte Zündwinkel sondern ein aus allem Zündwinkeln in diesem Betriebsbereich berechneten Zündwinkel, beispielsweise der Mittelwert ? abgespeichert wird.

Zum Zeitpunkt t1 erfolgt ein Bereichswechsel, d.h. ein Bereich des Adaptionskennfeldes wird verlassen und ein neuer Bereich eingenommen. Im vorliegenden Fall der Figur 3 erfolgt ein Bereichswechsel vom Bereich I in den Bereich II. Dieses erste Auftreten des Bereiches II im dargestellten Beobachtungszeit-raum der Figur 3 wird mit IIa bezeichnet, um zu verdeutlichen, daß dieser Bereich II im dargestellten Beobachtungszeitraum das erstemal auftritt. Die Zündwinkelausgabe zum Zeitpunkt t1 zeigt die beim Stand der Technik übliche Zündwinkelausgabe. So wird hier der bei einem vorherigen Betrieb der Brennkraftmaschine im Betriebsbereich II ermittelte Zündwinkelwert beim Verlassen dieses Bereiches II als neuer Startwert für den Bereich II ausgegeben. Anschließend erfolgt im Betriebsbereich IIa eine Rückführung des Zündwinkels an den Kennfeldzündwinkel, wobei die Rückführung mit kleinerer Stufenhöhe und geringerer Stufenbreite geschieht.

Zum Zeitpunkt t2 erfolgt wiederum ein Bereichswechsel der Brennkraftmaschine. Und zwar wechselt der Betrieb der Brennkraftmaschine vom Betriebsbereich IIa in den Betriebsbereich Ib, wobei b kennzeichnet, daß dieser Betriebsbereich in der Figur 3 bereits das zweitemal auftritt. Zum Zeitpunkt t2 wird nun bei dem erfindungsgemäßen Verfahren geprüft, ob bei dem Bereichswechsel gleichzeitig eine Lastdynamik vorliegt. Tritt beim Bereichswechsel eine Lastdynamik auf, wird der Zündwinkel, welcher bei einem vorherigen, hier nicht dargestellten Betrieb der Brennkraftmaschine für diesen Betriebsbereich abgespeichert wurde, als Startwert für den Betrieb in diesem Betriebsbereich ausgegeben. Anschließend erfolgt erneut eine Rückführung dieses Zündwinkels an den Kennfeldzündwinkel bzw. bis zum Auftreten von Klopfen.

Zum Zeitpunkt t3 erfolgt ein Bereichswechsel, wobei der Betrieb der Brennkraftmaschine hier vom Betriebsbereich Ib in den Betriebsbereich IIb übergeht. Zum Zeitpunkt t3 wird wiederum geprüft, ob eine Lastdynamik ΔL auftritt. Zum Zeitpunkt t3 wird keine Lastdynamik festgestellt, so daß der aktuelle Zündwinkel beim Verlassen des Betriebsbereiches Ib als Startwert für den Betriebsbereich IIb beibehalten wird. Damit werden Zündwinkelsprünge bei einem Bereichswechsel der Brennkraftmaschine vermieden.

Letztendlich kann der jeweilige Zündwinkel vor dem Auftreten von Klopfen in den verschiedenen Betriebsbereichen erfaßt und so in das aktuelle Kennfeld zur Bestimmung des Zündwinkels eingeschrieben werden, daß der vorherige dort stehende Wert überschrieben wird. Damit wird das Zündwinkel-Kennfeld ständig erneuert und die Zündwinkelausgabe optimal an den Betrieb der Brennkraftmaschine angepaßt. Es existiert also eine Art selbstlernendes Zündwinkel-Kennfeld, das sich immer näher an die Klopfgrenze herantastet. Hierbei gibt es verschiedene Möglichkeiten, einen Zündwinkel auszuwählen bzw. festzulegen, der den gespeicherten Kennfeld-Zündwinkel ersetzt. So kann beispielsweise der letzte Zündwinkel vor Auftreten eines Klopfens als neuer Zündwinkel für diesen Betriebspunkt oder der erste Zündwinkel nach dem Auftreten von Klopfen den bis dahin gespeicherten Kennfeld-Zündwinkel überschreiben. Denkbar ist auch, den Zündwinkel vor dem Auftreten von Klopfen mit einer geringen Korrektur beispielsweise einer festlegbaren Zündwinkelverschiebung ZW zu beaufschlagen und diesen Wert in das Kennfeld zu schreiben. Im übrigen kann noch vorgesehen werden, daß diese Korrektur des Kennfeldzündwinkels nur erfolgt, wenn der gespeicherte Zündwinkel des Kennfeldes sich von dem neuen in das Kennfeld zu schreibenden Zündwinkel um eine vorgebbare Differenz DZW unterscheidet.

Die Figur 4 zeigt schematisch den Ablauf des erfindungsgemäßen Verfahrens. Zunächst werden die Last L und die Drezahl N im Arbeitsschritt 9 erfaßt, woraufhin in einer Abfrage 10 ermittelt wird, ob ein Bereichswechsel aufgetreten ist. Ist dies der Fall, so wird in einer anschließenden Abfrage 11 geprüft, ob gleichzeitig eine Last- und/oder Drehzahldynamik (ΔL, ΔN) vorliegt. Je nach Beantwortung dieser Frage 11 wird dann bei einem Ja im Arbeitsschritt 12 der für diesen Betriebsbereich in einem Adaptionskennfeld abgespeicherte Zündwinkel als Startzündwinkel ausgegeben, bzw. bei einem Nein im Arbeitsschritt 13 der Zündwinkel des gerade verlassenen Betriebsbereiches beibehalten. Wurde die Abfrage 10 nach dem Vorliegen eines Bereichswechsels mit Nein beantwortet, dann läuft die Klopfregelung wie bekannt ab, d.h. in der Abfrage 14 wird geprüft, ob ein Klopfen K vorliegt. Ist dies der Fall, so wird im Arbeitsschritt 15 die Klopfregelung durch Spätverstellung des Zündwinkels um einen vorgebbaren Betrag ΔZW durchgeführt und die aktuelle Spätverstellung in einem Adaptionskennfeld abgelegt. Wurde in der Abfrage 14 kein Klopfen erkannt, so wird in einer Abfrage 16 geprüft, ob die aktuelle Zündwinkeländerung ΔZW und der gespeicherte Zündwinkel um einen vorgebbaren Schellwert DZW differieren. Ist dies der Fall, so führt ein Ja auf diese Abfrage zu dem Arbeitsschritt 15, in welchem die aktuelle Zündwinkeländerung inm Adaptionskennfeld abgespeichert wird. Wurde hingegen die Abfrage 16 verneint, dann wird die aktuelle Zündwinkeländerung auf Null gesetzt und der Kennfeldzündwinkel für die Steuerung des Betriebs der Brennkraftmaschine ausgegeben.

Nun gibt es verschiedene Möglichkeiten zum Lernen der Klopfgrenze. So kann beispielsweise der Zündwinkel unmittelbar vor dem dem Auftreten von Klopfen K, der Zündwinkel unmittelbar nach dem Auftreten von Klopfen K, also nach der ersten Korrektur in Richtung spät in das Kennfeld geschrieben werden. Denkbar ist aber beispielsweise auch, den Zündwinkel vor dem Auftreten von Klopfen um eine vorgebbaren Wert der Zündwinkeländerung zu verschieben und diesen Wert in das Kennfeld zum Lernen der Klopfgrenze zu speichern.

## Patentansprüche

1. Verfahren zur adaptiven Klopfregelung einer Brennkraftmaschine, wobei beim Auftreten von Klopfen in einem Zylinder eine Spätverstellung des Zündwinkels für diesen Zylinder erfolgt und anschließend, wenn kein Klopfen auftritt eine Rückführung des Zündwinkels in Richtung Früh erfolgt, wobei in einem Adaptionskennfeld, welches in Abhängigkeit von der Größe von Betriebsparametern der Brennkraftmaschine unterteilte Bereich aufweist, die während des Betriebs in einem Bereiche ermittelten Zündwinkelspätverstellwerte beim Verlassen dieses Bereichs abgespeichert werden und daß bei einem erneuten Wechsel in diesen Bereich und gleichzeitigem Vorliegen einer Last- und/oder Drehzahldynamik (ΔL, ΔN) die abgespeicherten Zündwinkelspätverstellwerte ausgegeben werden.

2. Verfahren nach Anspruch 1, dadurch gekennzeichnet, daß bei einem Bereichswechsel und einer Last und/oder Drehzahländerung kleiner als ein vorgebbarer Wert der Zündwinkelspätverstellwertes des Betriebsbereichs, der gerade verlassen wird, beibehalten wird.

3. Verfahren nach Anspruch 1 oder 2, dadurch gekennzeichnet, daß der Zündwinkel vor dem Auftreten von Klopfen in das Kennfeld geschrieben wird.

4. Verfahren nach Anspruch 1 oder 2, dadurch gekennzeichnet, daß der Zündwinkel nach dem Auftreten von Klopfen in das Kennfeld geschrieben wird.

5. Verfahren nach Anspruch 1 oder 2, dadurch gekennzeichnet, daß der Zündwinkel vor dem Auftreten von Klopfen mit einer Zündwinkeländerung beaufschlagt wird und dieser Wert in das Kennfeld geschrieben wird.

6. Verfahren nach einem der Ansprüche 3 bis 5, dadurch gekennzeichnet, daß der gespeicherte Kennfeld-Zündwinkel nur durch den neuen Zündwinkel ersetzt wird, wenn sich beide Zündwinkel um eine vorgebbare Differenz DZW unterscheiden.

## Claims

1. Method for the adaptive knock control of an internal combustion engine, in which, when knocking occurs in a cylinder, the ignition angle for this cylinder is retarded, and subsequently, when no knocking occurs, a return of the ignition angle in the advance direction takes place, the ignition-angle retard values determined in a range during operation being stored, when this range is left, in an adaptation characteristic diagram which has ranges subdivided as a function of the magnitude of operating parameters of the internal combustion engine, and in which, in the event of a renewed change in this range and simultaneous presence of load and/or engine speed dynamics (ΔL, ΔN), the stored ignition-angle retard values are output.

2. Method according to Claim 1, characterized in that when there is a change of range and a change in load and/or rotational speed smaller than a predefinable value, the ignition-angle retard value of the operating range which has just been left is maintained.

3. Method according to Claim 1 or 2, characterized in that the ignition angle is written into the characteristic diagram before knocking occurs.

4. Method according to Claim 1 or 2, characterized in that the ignition angle is written into the characteristic diagram after knocking occurs.

5. Method according to Claim 1 or 2, characterized in that an ignition angle change is applied to the ignition angle before knocking occurs, and this value is written into the characteristic diagram.

6. Method according to one of Claims 3 to 5, characterized in that the stored characteristic-diagram ignition angle is replaced by the new ignition angle only if both ignition angles differ by a predefinable difference DZW.

## Revendications

1. Procédé de régulation adaptative du cliquetis d'un moteur à combustion interne,
dans lequel
lors de l'apparition du cliquetis dans un cylindre un décalage de l'angle d'allumage dans le sens du retard a lieu pour ce cylindre, et ensuite, s'il ne se produit pas de cliquetis, un retour de l'angle d'allumage a lieu dans le sens de l'avance, alors que, dans un champ caractéristique d'adaptation qui présente, en fonction de la grandeur des paramètres de fonctionnement du moteur à combustion interne, des régimes subdivisées, les valeurs du déplacement de l'angle d'allumage dans le sens du retard qui ont été déterminées pendant le fonctionnement, sont mises en mémoire lorsque le moteur à combustion interne quitte ce régime et
en ce que lors d'un nouveau changement dans ce régime et de l'existence simultanée d'une charge et/ou d'une dynamique de la vitesse de rotation (ΔL,ΔN), on délivre les valeurs du retard de l'angle d'allumage mises en mémoire, du déplacement dans le sens.

2. Procédé selon la revendication 1,
caractérisé en ce que
lors d'un changement de régime, et d'une variation de la charge et/ou de la vitesse de rotation, inférieur à une valeur que l'on peut définir au préalable, la valeur du décalage de l'angle d'allumage dans le sens du retard du changement de régime, que l'on vient justement de quitter, est conservée.

3. Procédé selon la revendication 1 ou 2,
caractérisé en ce que
l'angle d'allumage avant l'apparition du cliquetis est inscrit dans le champ caractéristique.

4. Procédé selon la revendication 1 ou 2,
caractérisé en ce que
l'angle d'allumage après l'apparition du cliquetis est inscrit dans le champ caractéristique.

5. Procédé selon la revendication 1 ou 2,
caractérisé en ce que
l'angle d'allumage avant l'apparition du cliquetis est affecté d'une variation, et cette valeur est inscrite dans le champ caractéristique.

6. Procédé selon l'une des revendications 3 à 5,
caractérisé en ce que
l'angle d'allumage du champ caractéristique, mis en mémoire, n'est remplacé que par le nouvel angle d'allumage, quand les deux angles d'allumage sont séparés d'une différence ΔZW que l'on peut définir au préalable.
